# EUROPEAN PATENT APPLICATION

(11) **EP 4 668 515 A1**
(43) Date of publication of application: **24.12.2025**
(21) Application number: 24211877.6
(22) Date of filing: 08.11.2024
(51) Int. Cl.: H02H 7/20, H02J 1/04, H02J 3/18

(54) **CIRCULATING-CURRENT PROTECTION CIRCUIT AND PHOTOVOLTAIC SYSTEM**

(30) Priority: 19.06.2024 CN 202410797791
(71) Applicant: Sunshare Power Technology Co., Ltd., Nanjing Jiangsu 211153 (CN)
(72) Inventor: HE, Peng, 211153 Nanjing (CN); CHEN, Lei, 211153 Nanjing (CN); KANG, Ming, 211153 Nanjing (CN); ZHENG, Benben, 211153 Nanjing (CN); ZHANG, Yuehuo, 211153 Nanjing (CN)
(74) Representative: Rooney, John-Paul

(57) **Abstract**

A circulating-current protection circuit and a photovoltaic system are provided according to the present disclosure, relating to the technical field of photovoltaic power generation. The circulating-current protection circuit is applied to a photovoltaic system. The photovoltaic system includes multiple photovoltaic modules connected in parallel. The circulating-current protection circuit is arranged corresponding to any one of the photovoltaic modules, and includes a switching unit and a detection and control unit, where the switching unit is connected between an output terminal of the corresponding photovoltaic module and a load; the detection and control unit is connected to the switching unit, and is configured to turn on the switching unit if the detection and control unit determines that no current or a forward current flows through the switching unit, and turn off the switching unit if the detection and control unit determines that a reverse current flows through the switching unit. The circulating-current protection circuit can effectively prevent backflow of current, and is implemented easily.

## Description

### FIELD

The present disclosure relates to the technical field of photovoltaic power generation, and in particular to a circulating-current protection circuit and a photovoltaic system.

### BACKGROUND

In a photovoltaic system, photovoltaic modules connected in parallel may different in characteristics, leading to circulating current occurring among the photovoltaic modules, thus reducing power generation efficiency of the photovoltaic modules and affecting the power generation capacity. The occurrence of the circulating current is resulted from the following causes.

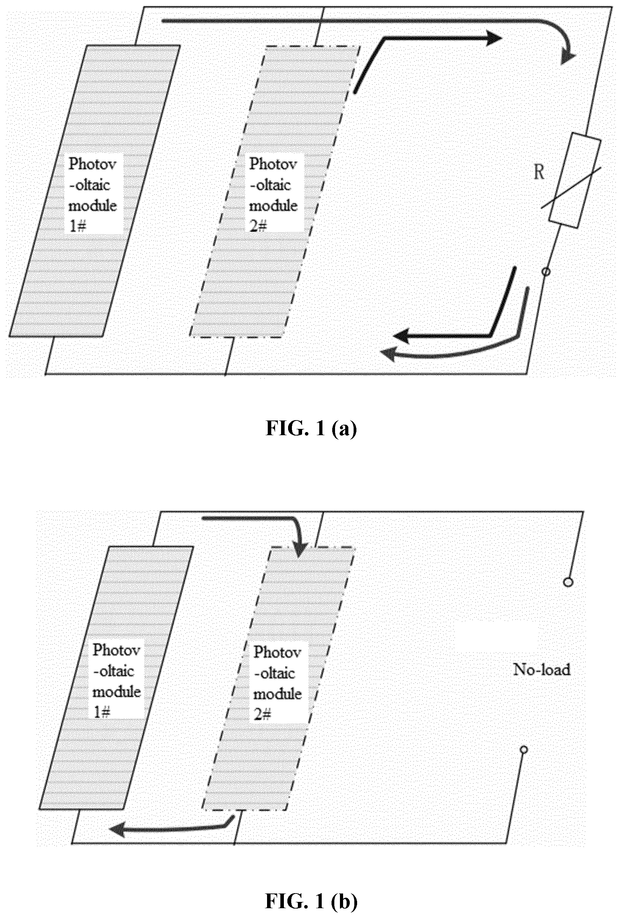

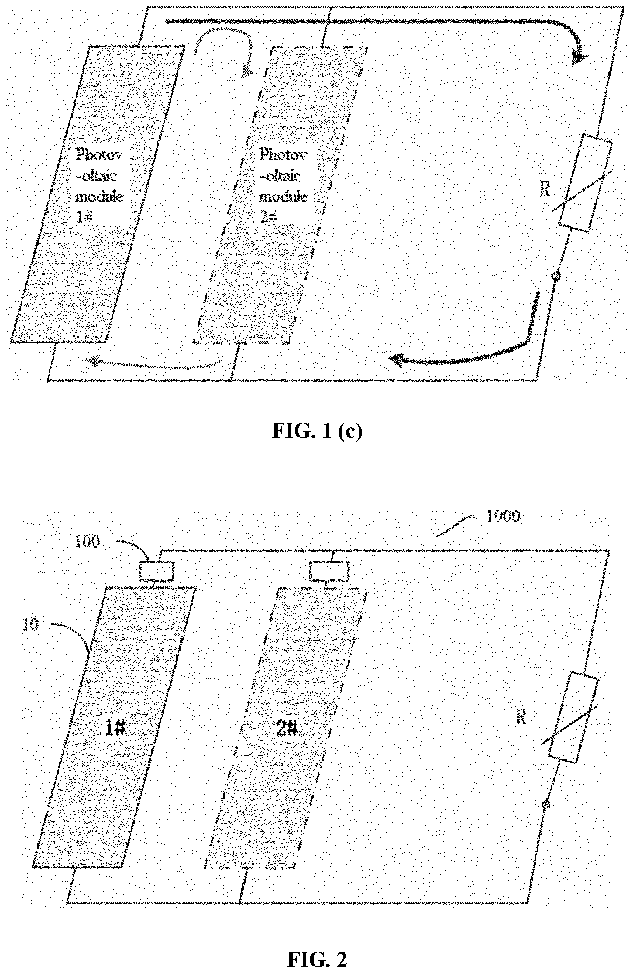

In a case that the photovoltaic modules connected in parallel are externally connected to a load R, the photovoltaic modules output power at respective maximum operating currents under a normal condition, no circulating current occurs among the photovoltaic modules, as shown in FIG. 1(a). In a case that no load is connected to an external port of the photovoltaic modules, a loop is formed among the photovoltaic modules connected in parallel. The loop has a circulating current due to the different characteristics of the photovoltaic modules. The current flows from a photovoltaic module with a high output capacity to a photovoltaic module with a low output capacity, as shown in FIG. 1(b). In a case that the photovoltaic modules connected in parallel are externally connected to a load to output power, the circulating current may also occur among the photovoltaic modules, as shown in FIG. 1(c). In this case, a photovoltaic module 2# with a low current output capacity serves as a load and may absorb part of power of the system. This part of the power and power absorbed by the externally-connected load R are provided by a photovoltaic module 1#.

### SUMMARY

The present disclosure aims to solve the technical problem in the conventional technology. In view of this, the present disclosure is to provide a circulating-current protection circuit and a photovoltaic system, to effectively prevent backflow of current.

In order to solve the above technical problem, a circulating-current protection circuit is provided according to a first aspect of embodiments of the present disclosure, and is applied to a photovoltaic system. The photovoltaic system includes multiple photovoltaic modules connected in parallel. The circulating-current protection circuit is arranged corresponding to any one of the multiple photovoltaic modules. The circulating-current protection circuit includes a switching unit and a detection and control unit. The switching unit is connected between an output terminal of the corresponding photovoltaic module and a load. The detection and control unit is connected to the switching unit, and is configured to turn on the switching unit if the detection and control unit determines that no current or a forward current flows through the switching unit, and turn off the switching unit if the detection and control unit determines that a reverse current flows through the switching unit.

The circulating-current protection circuit according to the embodiments of the present disclosure is applied to the photovoltaic system including multiple photovoltaic modules connected in parallel, and is arranged corresponding to any one of the photovoltaic modules. The switching unit is connected between the output terminal of the corresponding photovoltaic module and the load. The detection and control unit turns on the switching unit if the detection and control unit determines that no current or the forward current flows through the switching unit. The detection and control unit turns off the switching unit if the detection and control unit determines that the reverse current flows through the switching unit. Therefore, the circulating-current protection circuit can effectively prevent backflow of current, and is implemented easily.

In addition, the circulating-current protection circuit according to the embodiments of the present disclosure further includes the following technical features.

In an embodiment of the present disclosure, the circulating-current protection circuit further includes a power supply unit. The power supply unit is connected to the detection and control unit and a high-voltage side of the corresponding photovoltaic module, and is configured to provide a supply voltage for the detection and control unit based on a voltage of the corresponding photovoltaic module.

In an embodiment of the present disclosure, the detection and control unit includes a first resistor, a second resistor, a third resistor, a first triode, a second triode, a third triode and a first capacitor; where a first terminal of the first resistor, a first terminal of the second resistor and a first terminal of a third resistor are connected to the power supply unit; a second terminal of the first resistor is connected to an emitter of the third triode and a control terminal of the switching unit; a collector of the third triode is connected to a first terminal of the switching unit, a first terminal of the first capacitor and an emitter of the second triode; a second terminal of the second resistor is connected to a collector of the second triode, a base of the third triode and a second terminal of the first capacitor; a second terminal of the third resistor is connected to a base of the second triode and a base of the first triode; and a collector of the first triode is connected to a second terminal of the switching unit.

In an embodiment of the present disclosure, at least one of the second resistor and the third resistor is an adjustable resistor.

In an embodiment of the present disclosure, the detection and control unit further includes a second capacitor. A first terminal of the second capacitor is connected to the first terminal of the first resistor, and a second terminal of the second capacitor is connected to the first terminal of the switching unit.

In an embodiment of the present disclosure, the first triode and the second triode are NPN type triodes, and the third triode is a PNP type triode.

In an embodiment of the present disclosure, the switching unit is connected to the output terminal of a high-voltage side of the corresponding photovoltaic module; or, the switching unit is connected to a low-voltage side of the corresponding photovoltaic module.

In an embodiment of the present disclosure, the switching unit includes a switching transistor. A first terminal of the switching transistor serves as the first terminal of the switching unit, a second terminal of the switching transistor serves the second terminal of the switching unit, and a control terminal of the switching transistor serves as the control terminal of the switching unit.

In order to solve the above technical problem, a photovoltaic system is provided according to a second aspect of the embodiments of the present disclosure. The photovoltaic system includes multiple photovoltaic modules and the circulating-current protection circuit according to the first aspect of the embodiments, where the multiple photovoltaic modules are connected in parallel, and the circulating-current protection circuit is arranged corresponding to any one of the multiple photovoltaic modules.

In addition, the photovoltaic system according to the embodiments of the present disclosure further includes the following technical features.

In an embodiment of the present disclosure, the number of the circulating-current protection circuit is more than one, the multiple circulating-current protection circuits and the multiple photovoltaic modules are in one-to-one correspondence.

The photovoltaic system according to the embodiments of the present disclosure can effectively prevent backflow of the current and is implemented easily due to the circulating-current protection circuit described in the above embodiments.

### BRIEF DESCRIPTION OF THE DRAWINGS

FIG. 1 (a) is a schematic diagram of a circulating current occurring in a photovoltaic system;
FIG. 1 (b) is a schematic diagram of another circulating current occurring in a photovoltaic system;
FIG. 1 (c) is a schematic diagram of another circulating current occurring in a photovoltaic system;
FIG. 2 is a schematic structural diagram of a photovoltaic system according to an embodiment of the present disclosure;
FIG. 3 is a schematic structural diagram of a circulating-current protection circuit according to an embodiment of the present disclosure;
FIG. 4 is a schematic structural diagram of a circulating-current protection circuit according to another embodiment of the present disclosure;
FIG. 5 is a schematic structural diagram of a circulating-current protection circuit according to another embodiment of the present disclosure;
FIG. 6 is a schematic structural diagram of a switching unit according to an embodiment of the present disclosure;
FIG. 7 (a) is a schematic structural diagram of a detection and control unit according to an embodiment of the present disclosure;
FIG. 7 (b) is a schematic structural diagram of a detection and control unit according to an embodiment of the present disclosure;
FIG. 8 is schematic diagram of the detection and control unit shown in FIG. 7(b) in a case that forward current flows through a switching unit;
FIG. 9 is schematic diagram of the detection and control unit shown in FIG. 7(b) in a case that reverse current flows through a switching unit; and
FIG. 10 is a schematic structural diagram of a photovoltaic system according to another embodiment of the present disclosure.

**Reference numerals in the drawings:**

| | | | |
|---|---|---|---|
| 1000 | photovoltaic system; | 100 | circulating-current protection circuit; |
| 10 | photovoltaic module; | 110 | switching unit; |
| 120 | detection and control unit; | 130 | power supply unit; |
| R1 | first resistor; | R2 | second resistor; |
| R3 | third resistor; | Q1 | first triode; |
| Q2 | second triode; | Q3 | third triode; |
| M | switching transistor; | C1 | first capacitor; |
| C2 | second capacitor. | | |

### DETAILED DESCRIPTION

The embodiments of the present disclosure are described in detail hereinafter, and examples of the embodiments are shown in drawings, where the same or similar reference numerals represent the same or similar elements or elements having the same or similar functions throughout the description. The embodiments described below with reference to the drawings are only exemplary embodiments which are used to explain the present disclosure, and should not be construed to limit the present disclosure.

A circulating-current protection circuit and a photovoltaic system according to embodiments of the present disclosure are described with reference to the drawings.

In an embodiment of the present disclosure, as shown in FIG. 2, a circulating-current protection circuit 100 is applied to a photovoltaic system 1000. The photovoltaic system 1000 includes multiple photovoltaic modules 10 connected in parallel. The circulating-current protection circuit 100 is arranged corresponding to any one of the photovoltaic modules 10, that is, the photovoltaic system 1000 may be provided with one or more circulating-current protection circuits 100. Each of the circulating-current protection circuits 100 is arranged corresponding to one photovoltaic module 10, and is configured to prevent backflow of current in the photovoltaic module 10. FIG. 2 shows an example that multiple circulating-current protection circuits 100 and the multiple photovoltaic modules 10 are in one-to-one correspondence.

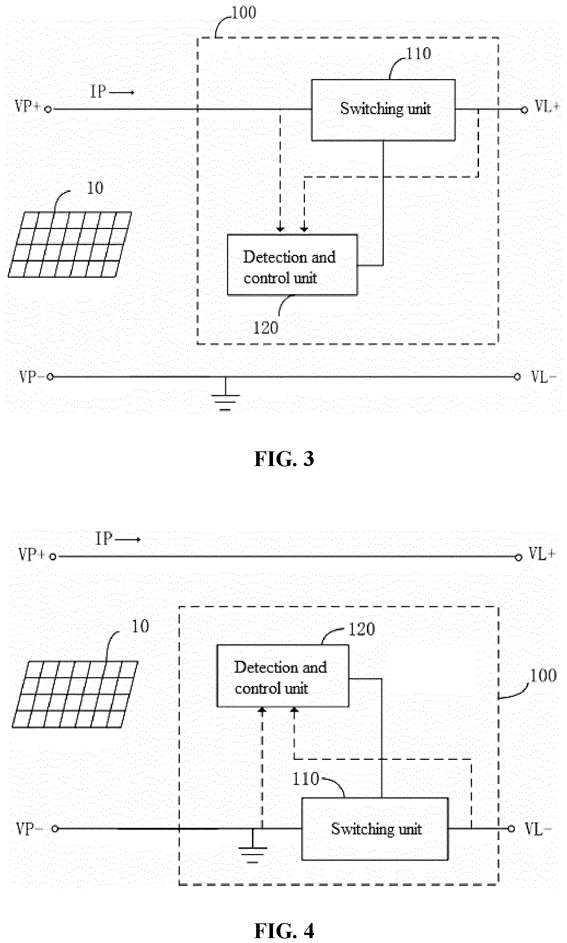

FIG. 3 is a schematic structural diagram of a circulating-current protection circuit according to an embodiment of the present disclosure.

As shown in FIG. 3, the circulating-current protection circuit 100 includes a switching unit 110 and a detection and control unit 120. The switching unit 110 is connected between an output terminal of the corresponding photovoltaic module 10 and a load (which may be another photovoltaic module or a micro inverter of the photovoltaic module 10). The detection and control unit 120 is connected to the switching unit 110, and is configured to turn on the switching unit 110 if the detection and control unit determines that no current or a forward current flows through the switching unit 110, and turn off the switching unit 110 if the detection and control unit determines that a reverse current flows through the switching unit 110.

FIG. 4 is a schematic structural diagram of a circulating-current protection circuit according to another embodiment of the present disclosure. The embodiment shown in FIG. 3 is different from the embodiment shown in FIG. 4 in that the position of the switching unit 110 is different. In the embodiment shown in FIG. 3, the switching unit 110 is connected to a high-voltage side of the photovoltaic module 10. In the embodiment shown in FIG. 4, the switching unit 110 is connected to a low-voltage side of the photovoltaic module 10. That is, the position of the switching unit 110 is not limited, the switching unit 110 may be arranged at the low-voltage side, or arranged at the high-voltage side. In an embodiment, two switching units 110 are arranged, in order to improve reliability of the circulating-current protection, where one switching unit is arranged at the low-voltage side, and the other is arranged at the high-voltage side.

It should be noted that in the embodiment shown in FIG. 3, in a case that current outflowing from the photovoltaic module 10 flows into the switching unit 110, it is determined that the forward current flows through the switching unit 110; in a case that current outflowing from the switching unit 110 flows into the photovoltaic module 10, it is determined that the reverse current flows through the switching unit 110. In the embodiment shown in FIG. 4, in a case that current outflowing from the photovoltaic module 10 flows into the switching unit 110, it is determined that the reverse current flows through the switching unit 110; and in a case that current outflowing from the switching unit 110 flows into the photovoltaic module 10, it is determined that the forward current flows through the switching unit 110.

In order to solve the problem of circulating current among the photovoltaic modules 10 and improve the power generation efficiency of the photovoltaic modules 10, the circulating-current protection circuit 100 is provided according to the present disclosure. Referring to FIG. 3 and FIG. 4, in the circulating-current protection circuit 100, the switching unit 110 is arranged at a power supply circuit of the corresponding photovoltaic module 10 and arranged at the high-voltage side or the low-voltage side. The detection and control unit 120 detects a voltage across the switching unit 110 (indicated by dashed lines with arrows in FIG. 3 and FIG. 4) and determines a direction of the current flowing through the switching unit 110, turns on (by transmitting a control signal indicated by a solid line between the detection and control unit 120 and the switching unit 110) the switching unit 110 if the detection and control unit 120 determines that no current or the forward current flows through the switching unit 110, to ensure normal operation of the photovoltaic module 10, and turns off the switching unit 110 if the detection and control unit 120 determines that the reverse current flows through the switching unit 110, preventing backflow of current in the photovoltaic module 10. Functions of the detection and control unit 120 may be implemented by software or a hardware circuit.

Operation states are described in detail in conjunction with the embodiment shown in the FIG. 3.

In a first state, the photovoltaic module 10 operates normally (i.e., outputs power), current IP flows in a direction from VP+ to VL+, and the switching unit 110 is turned on, not affecting the normal operation of the photovoltaic module 10.

In a second state, the circulating current occurs among the photovoltaic modules 10, the current IP flows in a direction from VL+ to VP+, and the detection and control unit 120 turns off the switching unit 110 to achieve the circulating-current protection on the photovoltaic modules 10.

In a third state, the circulating current disappears among the photovoltaic modules 10, the current IP is restored to flow in the direction from VP+ to VL+, and the switching unit 110 20 is turned on again.

Therefore, the circulating-current protection circuit 100 is configured to prevent backflow of the current, effectively solving the problem of circulating current among the photovoltaic modules 10, that is, effectively preventing the current outputted from the load from flowing back into the photovoltaic modules 10. In addition, the circulating-current protection circuit 100 is implemented easily.

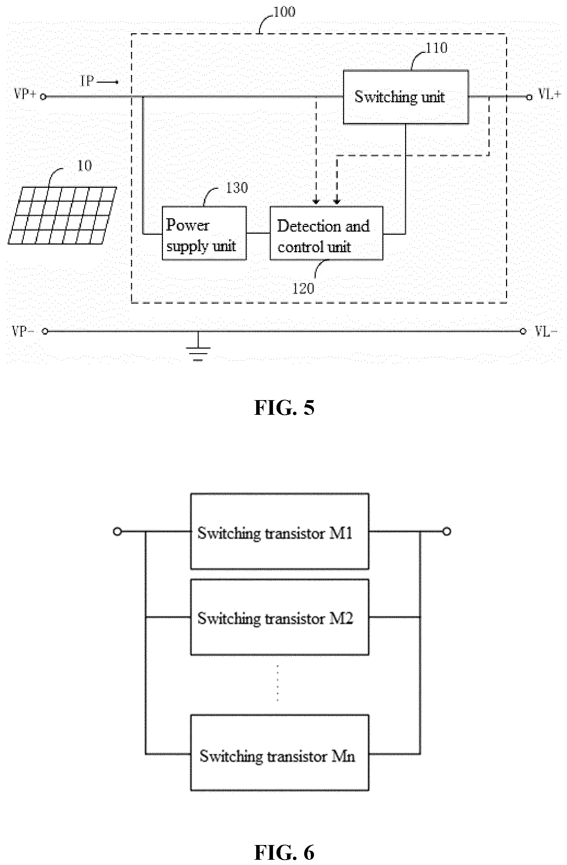

In some embodiments of the present disclosure, as shown in FIG. 5, the circulating-current protection circuit 100 further includes a power supply unit 130. In an embodiment, the power supply unit 130 is connected to the high-voltage side of the corresponding photovoltaic module 10, and is configured to provide a supply voltage for the detection and control unit 120. In another embodiment, as shown in FIG. 5, the power supply unit 130 is connected to the high-voltage side of the corresponding photovoltaic module 10, and is configured to provide the supply voltage for the detection and control unit 120 based on a voltage of the photovoltaic module.

The power supply unit 130 may be an auxiliary power supply. Referring to FIG. 5, the power supply unit 130 may provide the supply voltage for the detection and control unit 120 based on the voltage of the photovoltaic module 10. In a case that the switching unit 110 is connected to the high-voltage side of the photovoltaic module 10 (that is, between VP+ and VL+ shown in FIG. 3), the supply voltage is a voltage relative to VP+. In a case that the switching unit 110 is connected to the low-voltage side of the photovoltaic module 10 (that is, between VP- and VL- shown in FIG. 4), the supply voltage is a voltage relative to VP-.

In the embodiment, the detection and control unit 120 may function under the supply voltage. During the operating process, the detection and control unit 120 turns on the switching unit 110 if the detection and control unit 120 determines that no current or a forward current flows through the switching unit 110, and turns off the switching unit 110 if the detection and control unit 120 determines that a reverse current flows through the switching unit 110, so as to achieve the circulating-current protection.

In an embodiment of the present disclosure, the switching unit 110 includes one or more switching transistors M. In a case that the switching unit 110 includes multiple switching transistors M, the multiple switching transistors M (represented by M1, M2, ... , Mn) are connected in parallel as shown in FIG. 6.

The switching transistor M may be a metal-oxide-semiconductor (MOS) field-effect transistor, or other electrical component that is able to be turned on or off such as an insulate-gate bipolar transistor (IGBT) and a triode. It can be understood that the switching transistor M may be an N-channel type of transistor or other type of transistor, such as a P-channel type of transistor.

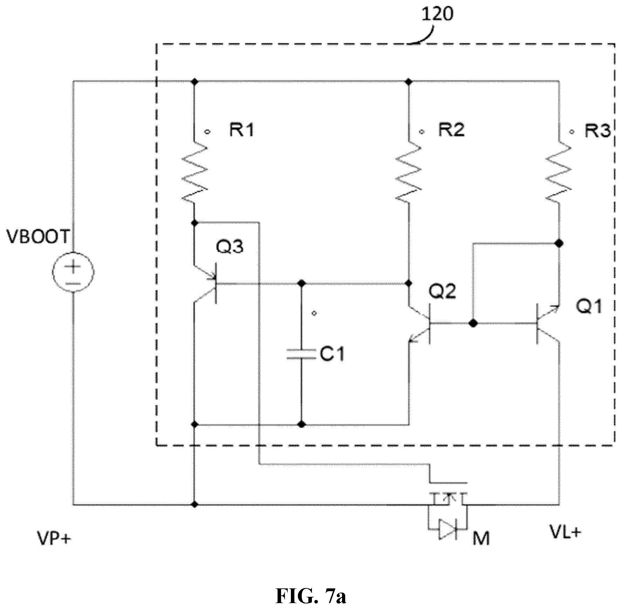

In some embodiments of the present disclosure, as shown in FIG. 7(a), the detection and control unit 120 includes a first resistor R1, a second resistor R2, a third resistor R3, a first triode Q1, a second triode Q2, a third triode Q3 and a first capacitor C1.

A first terminal of the first resistor R1, a first terminal of the second resistor R2 and a first terminal of the third resistor R3 are connected to the power supply unit 130 (providing a supply voltage VBOOT). A second terminal of the first resistor R1 is connected to an emitter of the third triode Q3 and a control terminal of the switching unit 110 (including one switching transistor M as shown in FIG. 7(a), for example). A collector of the third triode Q3 is connected to a first terminal of the switching unit 110, a first terminal of the first capacitor C1 and an emitter of the second triode Q2. A second terminal of the second resistor R2 is connected to a collector of the second triode Q2, a base of the third triode Q3 and a second terminal of the first capacitor C1. A second terminal of the third resistor R3 is connected to a base of the second triode Q2 and a base of the first triode Q1. A collector of the first triode Q1 is connected to a second terminal of the switching unit 110. It should be understood that connection lines of the first terminal and the second terminal of the switching unit 110 are shown as dashed lines with arrows in FIG. 3 to FIG. 5 for detecting a voltage. The connection line of the control terminal of the switching unit 110 is shown as a solid line between the detection and control unit 120 and the switching unit 110 in FIG. 3 to FIG. 5 for turning on or off the switching unit 110.

The base of the first triode Q1 is connected to the emitter of the first triode Q1, and the first triode Q1 functions as a diode. The first triode Q1 has less equivalent input resistance, and thus is more sensitive to a change of a parameter, causing output characteristics to be automatically compensated, improving stability of a quiescent operation point. In such connection manner, if a parameter of a nonlinear component changes due to a temperature or other factors in a case of bias, the change is automatically compensated.

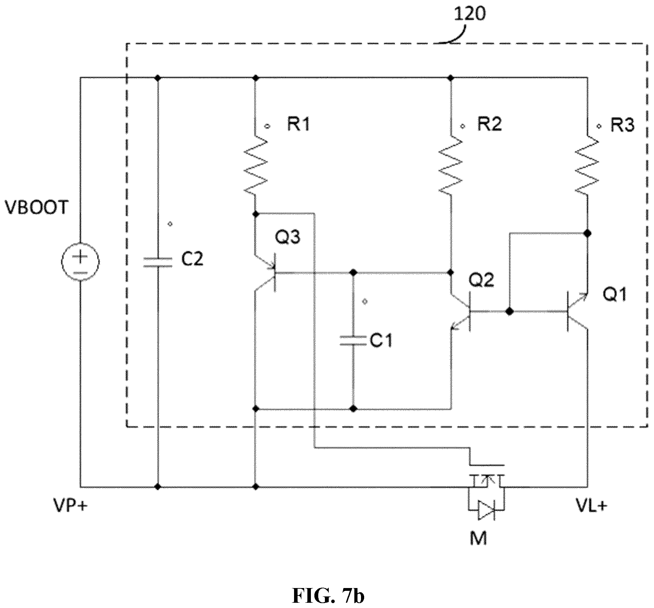

In some embodiments, as shown in FIG. 7(b), the detection and control unit 120 further includes a second capacitor C2. A first terminal of the second capacitor C2 is connected to the first terminal of the first resistor R1, and a second terminal of the second capacitor C2 is connected to the first terminal of the switching unit 110.

The second capacitor C2 is configured to stabilize the supply voltage VBOOT.

As shown in FIG. 7(a) and FIG. 7(b), the first triode Q1 and the second triode Q2 are NPN type triodes, and the third triode Q3 is a PNP type triode.

The operation principle of the detection and control unit 120 shown in FIG. 7(b) is as follows.

In a case that no current flows through the switching transistor M, a voltage across the switching transistor M is zero, a voltage between the base and the collector of the first triode Q1 is equal to a voltage between the base and the emitter of the second triode Q2, that is, VBC_Q1=VBE_Q2. In this case, the second triode Q2 and the third triode Q3 are turned off, and the switching transistor M is turned on.

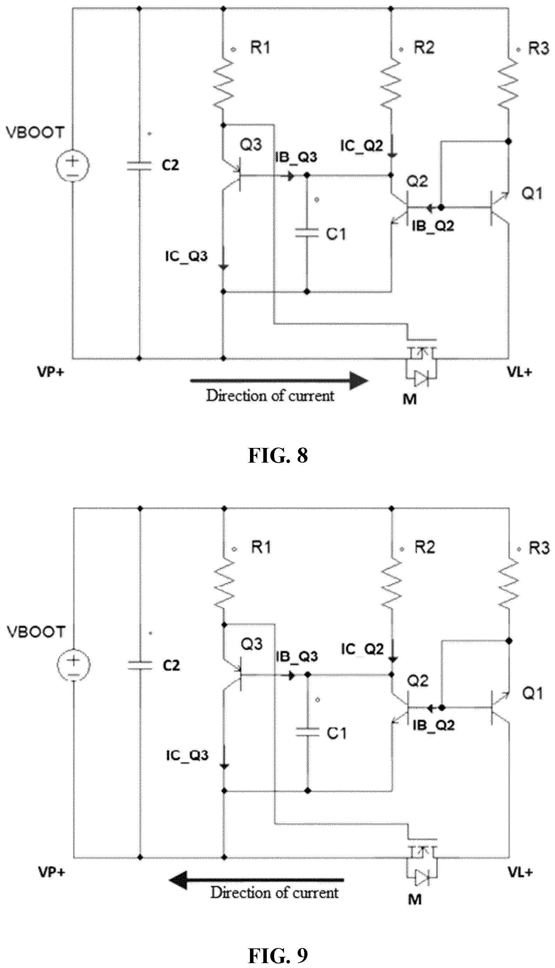

As shown in FIG. 8, the forward current flows through the switching transistor M in the direction from VP+ to VL+. The switching transistor M has an on-resistance RDS_ON, causing that the voltage across the switching transistor M is not zero. In this case, VBC_Q1>VBE_Q2, current IB_Q2 of the base of the second triode decreases, and current IC_Q2 of the collector of the second triode decreases. As the forward current increases (which may be determined based on the voltage across the switching transistor M), a driving voltage VGS for the switching transistor M increases, and the switching transistor M is constantly on.

It should be noted that, as the forward current increases, a voltage difference between the terminal VP+ and the terminal VL+ increases, a voltage of the terminal VL+ decreases, the current IB_Q2 of the base of the second triode Q2 decreases, the current IC_Q2 of the collector decreases, current IB_Q3 of the base of the third triode Q3 decreases, current IC_Q3 of the collector of the third triode Q3 decreases, and a voltage across the first resistor R1 decreases. As a result, the driving voltage VGS increases. During the operating process, the third triode Q3 and the second triode Q2 operate in a linear region, which is a changing process.

As shown in FIG. 9, the reverse current flows through the switching transistor M in the direction from VL+ to VP+. In this case, VBC_Q1<VBE_Q2, IB_Q2 increases, and IC_Q2 increases. As the reverse current increases, the driving voltage VGS for the switching transistor M decreases until the switching transistor M is turned off.

In the embodiment, the driving voltage VGS for the switching transistor M may be regulated by adjusting current flowing through the switching transistor M. In an embodiment, at least one of the second resistor R2 and the third resistor R3 is an adjustable resistor, so that the sensitivity of detection and control of the detection and control unit 120 can be regulated by adjusting resistance of the second resistor R2 and resistance of the third resistor R3, so as to rapidly turn on the switching transistor M in a case of the forward current flowing from VP+ to VL+, and rapidly turn off the switching transistor M in a case of the reverse current flowing from VL+ to VP+.

It should be noted that, base current of the second triode Q2 and base current of the third triode Q3 are changed by adjusting the resistance of the second resistor R2 and the resistance of the third resistor R3, thus changing a change speed of the driving voltage VGS for the switching transistor M, so as to regulate the sensitivity of detection and control of the detection and control unit 120.

The circulating-current protection circuit according to the embodiments of the present disclosure has the following technical advantages.
1) The circulating-current protection circuit can prevent backflow of current, which can effectively solve the problem of circulating current among the photovoltaic modules.
2) The circulating-current protection circuit can be automatically turned on, automatically turned off, and automatically restored by detecting a voltage.
3) The sensitivity of detection and control of the detection and control unit can be regulated by adjusting the resistance of the second resistor R2 and the resistance of the third resistor R3, achieving a rapid respond of the switching unit.
4) The circuit is controlled easily, and has temperature compensation characteristics and high reliability.

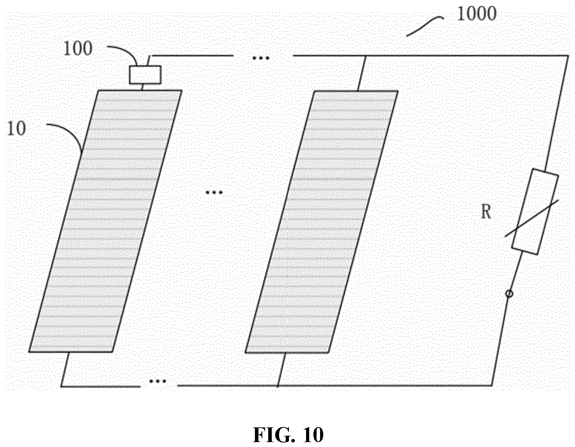

FIG. 10 is a schematic structural diagram of a photovoltaic system according to an embodiment of the present disclosure.

As shown in FIG. 10, a photovoltaic system 1000 includes multiple photovoltaic modules 10 and the circulating-current protection circuit 100 according to the above embodiments. The multiple photovoltaic modules 10 are connected in parallel, the circulating-current protection circuit 100 is arranged corresponding to any one of the photovoltaic modules 10.

In some embodiments of the present disclosure, referring to FIG. 2, the number of the circulating-current protection circuit 100 is more than one. The multiple circulating-current protection circuits 100 and the multiple photovoltaic modules 10 are in one-to-one correspondence.

The photovoltaic system according to the embodiments of the present disclosure can effectively prevent backflow of the current due to the circulating-current protection circuit described in the above embodiments, and is implemented easily .

It should be understood that each part of the present disclosure may be implemented in hardware, software, firmware, or a combination thereof. In the above embodiments, multiple steps or methods may be implemented by software or firmware stored in a memory and executed by a suitable instruction execution system. For example, the steps or methods are implemented in hardware, as the same in another implementation, using any one or a combination of the following technologies known in the field: a discrete logic circuit with a logic gate for implementing logic functions on a data signal, a specialized integrated circuit with a suitable combinational logic gate, a programmable gate array (PGA), a field programmable gate array (FPGA) and the like.

Throughout the description of this specification, the expressions refer to terms such as "an embodiment", "some embodiments", "an example", "specific example " and "some examples" indicate that specific features, structures, materials or characteristics described in combination with the embodiments or examples are included in at least one embodiment or example of the present disclosure. In the specification, schematic expressions of the above terms do not necessarily refer to the same embodiment or example. Furthermore, the specific features, structures, materials or characteristics described may be combined in a suitable manner in any one or more embodiments or examples.

Throughout the description of the present disclosure, it should be understood that the orientation or positional relationships indicated by terms such as "center", "longitudinal", "lateral", "length", "width", "thickness", "up", "down", "forward", "backward", "left", "right", "vertical", "horizontal", "top", "bottom", "inner", "outer", "clockwise", "anticlockwise", "axial", "radial", "circumferential" and the like are based on the orientation or positional relationships shown in the drawings, and are merely for the convenience of describing the present disclosure and the simplification of the description, instead of indicating or implying that the device or component referred must be arranged in a particular orientation, or be constructed and operated in a particular orientation, and therefore should not be construed as a limitation to the scope of the present disclosure.

Furthermore, the terms "first", "second" are merely for purpose of description, and should not be construed as indicating or implying relative importance or implying the number of the indicated technical features. Therefore, the feature defined by "first" or "second" explicitly or implicitly indicates that there is at least one such feature is included. In the description, the terms "multiple" means at least two or more than two, such as two, three and so on, unless clearly and specifically limited otherwise.

In the present disclosure, terms "arrange", "link", "connect" and "fix" should be understood in a broad sense unless otherwise expressly specified or limited. For example, the connection may be a fixed connection, a detachable connection, or as a whole; may be a mechanical connection, or an electrical connection; may be a direct connection, an indirect connection through an intermediary component, inner communication between two components, or interaction between two components, unless expressly specified otherwise. The specific meaning of the foregoing terms in the present disclosure can be understood by those skilled in the art based on the specific implementation.

In the present disclosure, unless expressly stated and limited otherwise, a first feature arranged "above" or "below" a second feature indicates that the first feature is directly in contact with the second feature, or the first feature is indirectly in contact with the second feature through an intermediary medium. Furthermore, the first feature arranged "on", "over" or "above" the second feature indicates that the first feature is directly above and obliquely above the second feature, or simply indicates that the first feature is higher than the second feature. The first feature arranged "beneath", "under" or "blow" the second feature indicates that the first feature is directly below and obliquely below the second feature, or simply indicates that the first feature is lower than the second feature.

Although the embodiments of the present disclosure have been illustrated and described above, it should be understood that the above embodiments are exemplary and should not be understood as limitation for the description. Those skilled in the art can make changes, modifications, substitutions and variations to the above embodiments within the scope of the present disclosure.

## Claims

1. A circulating-current protection circuit, applied to a photovoltaic system, wherein the photovoltaic system comprises a plurality of photovoltaic modules connected in parallel, and the circulating-current protection circuit is arranged corresponding to any one of the plurality of photovoltaic modules,
wherein the circulating-current protection circuit comprises:
a switching unit, connected between an output terminal of the corresponding photovoltaic module and a load; and
a detection and control unit, wherein the detection and control unit is connected to the switching unit, and is configured to turn on the switching unit if the detection and control unit determines that no current or a forward current flows through the switching unit and turn off the switching unit if the detection and control unit determines that a reverse current flows through the switching unit.

2. The circulating-current protection circuit according to claim 1, further comprising a power supply unit,
wherein the power supply unit is connected to the detection and control unit and a high-voltage side of the corresponding photovoltaic module, and is configured to provide a supply voltage for the detection and control unit based on a voltage of the corresponding photovoltaic module.

3. The circulating-current protection circuit according to claim 2, wherein the detection and control unit comprises a first resistor, a second resistor, a third resistor, a first triode, a second triode, a third triode and a first capacitor, wherein
a first terminal of the first resistor, a first terminal of the second resistor and a first terminal of the third resistor are connected to the power supply unit; a second terminal of the first resistor is connected to an emitter of the third triode and a control terminal of the switching unit; a collector of the third triode is connected to a first terminal of the switching unit, a first terminal of the first capacitor and an emitter of the second triode; a second terminal of the second resistor is connected to a collector of the second triode, a base of a third triode and a second terminal of the first capacitor; a second terminal of the third resistor is connected to a base of the second triode and a base of the first triode; and a collector of the first triode is connected to a second terminal of the switching unit.

4. The circulating-current protection circuit according to claim 3, wherein at least one of the second resistor and the third resistor is an adjustable resistor.

5. The circulating-current protection circuit according to claim 3, wherein the detection and control unit further comprises a second capacitor, wherein
a first terminal of the second capacitor is connected to the first terminal of the first resistor, and a second terminal of the second capacitor is connected to the first terminal of the switching unit.

6. The circulating-current protection circuit according to claim 3, wherein the first triode and the second triode are NPN type triodes, and the third triode is a PNP type triode.

7. The circulating-current protection circuit according to any one of claims 1 to 6, wherein
the switching unit is connected to the output terminal of a high-voltage side of the corresponding photovoltaic module; or
the switching unit is connected to a low-voltage side of the corresponding photovoltaic module.

8. The circulating-current protection circuit according to claim 3, wherein the switching unit comprises a switching transistor, wherein
a first terminal of the switching transistor serves as the first terminal of the switching unit, a second terminal of the switching transistor serves the second terminal of the switching unit, and a control terminal of the switching transistor serves as the control terminal of the switching unit.

9. A photovoltaic system, comprising a plurality of photovoltaic modules and the circulating-current protection circuit according to any one of claims 1 to 8, wherein
the plurality of photovoltaic modules are connected in parallel, and the circulating-current protection circuit is arranged corresponding to any one of the plurality of photovoltaic modules.

10. The photovoltaic system according to claim 9, wherein the number of the circulating-current protection circuit is more than one, the plurality of circulating-current protection circuits and the plurality of photovoltaic modules are in one-to-one correspondence.
